# EUROPÄISCHE PATENTSCHRIFT

(11) **EP 3 371 234 B1**
(45) Veröffentlichungstag und Bekanntmachung des Hinweises auf die Patenterteilung: **29.03.2023**
(21) Anmeldenummer: 16781467.2
(22) Anmeldetag: 14.10.2016
(51) Int. Cl.: C08G 18/48, B29B 9/06, C08G 18/66, C08G 18/75, C08G 18/08, C08G 18/22, C08G 18/32

(54) **VERFAHREN ZUR HERSTELLUNG THERMOPLASTISCHER POLYURETHANE**
METHOD FOR PRODUCING THERMOPLASTIC POLYURETHANES
PROCEDE DE FABRICATION D'UN POLYURETHANE THERMOPLASTIQUE

(30) Priorität: 04.11.2015 EP 15192927
(43) Veröffentlichungstag der Anmeldung: 12.09.2018
(73) Patentinhaber: BASF SE, 67056 Ludwigshafen am Rhein (DE)
(72) Erfinder: HENZE, Oliver Steffen, 49448 Lemfoerde (DE); KEMPFERT, Dirk, 49448 Lemfoerde (DE)
(74) Vertreter: BASF IP Association
(86) Internationale Anmeldenummer: PCT/EP2016/074721
(87) Internationale Veröffentlichungsnummer: WO 2017/076609

(56) Entgegenhaltungen:
- EP-A1- 1 422 259
- EP-A1- 1 801 141
- WO-A1-2015/063062
- WO-A1-2015/063062
- WO-A2-03/099875
- WO-A2-03/099875
- WO-A2-2009/023131
- DE-T2- 69 516 978
- Dieter Guhl: "Alternatives to DBTL catalysts in polyurethanes - a comparative study", , 21. August 2014 (2014-08-21), XP055249182, Gefunden im Internet: URL:https://www.researchgate.net/profile/D ieter_Guhl2/publication/264934332_Alternat ives_to_DBTL_catalysts_in_polyurethanes_-_ a_comparative_study/links/53f62cf50cf2888a 74930c38.pdf?inViewer=0&pdfJsDownload=0&or igin=publication_detail [gefunden am 2016-02-11]

## Beschreibung

Die vorliegende Erfindung betrifft ein Verfahren zur Herstellung eines thermoplastischen Polyurethans umfassend die Umsetzung einer Isocyanatzusammensetzung mindestens enthaltend 4,4'-Diisocyanatodicyclohexylmethan (H12MDI) mit einer Polyolzusammensetzung (PZ) in Gegenwart einer Katalysatorzusammensetzung mindestens enthaltend eine bismuthaltige Verbindung ausgewählt aus Bismut(tricarboxylat)katalysatoren, wobei die Carboxylreste unabhängig voneinander 6 bis 12 C-Atome aufweisen, unter Erhalt einer Schmelze und die Herstellung eines Granulats aus der erhaltenen Schmelze. Weiterhin betrifft die vorliegende Erfindung ein thermoplastisches Polyurethan erhalten oder erhältlich gemäß dem erfindungsgemäßen Verfahren sowie die Verwendung zur Herstellung von Folien, Profilen, Kabelummantellungen und Ummantelungen von LED Bändern.

Thermoplastische Polyurethane, im Folgenden auch als TPU bezeichnet, und Verfahren zu deren Herstellung sind allgemein bekannt und vielfältig beschrieben.

Insbesondere thermoplastische Polyurethane auf Basis aliphatischer Isocyanate haben den Vorteil einer besonders guten Lichtechtheit. Diese sogenannten aliphatischen thermoplastischen Polyurethane finden zunehmend Anwendung bei der Herstellung von lichtstabilen und farbechten Formteilen wie z. B. Spritzgussteilen jeglicher Form, Folien, Schläuche, Kabel oder Sinterfolien wie etwa Oberflächen von Instrumententafeln.

Auch thermoplastische Polyurethane basierend auf H12MDI bestechen durch ihre hohe Transparenz bei gleichzeitig sehr gutem mechanischem Niveau sowie einer äußerst geringen Neigung zur Vergilbung. Deswegen werden diese Materialien häufig zu Folien verarbeitet und als Schutzfilm auf verschiedene andere Materialien aufgetragen. Unter anderem werden diese Folien als Steinschlagschutz oder auch als Laminatbeschichtung verwendet. Ein weiterer Anwendungsbereich für derartige Folien sind transparente Mehrschichtverbunde. Dabei dienen die Folien zum Verkleben von z.B. Glas mit Polycarbonatschichten zur Herstellung von z.B. schusssicherem Glas.

Auch die Herstellung dieser thermoplastischen Polyurethane basierend auf H12MDI ist Stand der Technik. Wegen der Reaktionsträgheit des H12MDI werden die Materialien häufig im diskontinuierlichen Gießverfahren hergestellt und die gegossenen Blöcke nach der abgeschlossenen Reaktion dann anschließend zweckmäßig zerkleinert. Die Zweistufigkeit des Verfahrens ist hier nachteilig.

Auch die kontinuierliche Herstellung mit einem Reaktionsextruder mit anschließender Unterwassergranulierung ist an sich bekannt. Dieses Herstellverfahren ist wegen der Einstufigkeit und den damit verbundenen verringerten Kosten gegenüber mehrstufigen Verfahren vorteilhaft. Dabei sind jedoch die Verweilzeiten der einzelnen Reaktanden im Extruder häufig nicht ausreichend, so dass zwar eine granulierfähige Schmelze erhalten wird, aber die Polymerreaktion nicht abgeschlossen werden kann. In der erhaltenen Schmelze liegen dann noch unreagierte Isocyanate sowie Alkohole vor. In der Unterwassergranulierung wird diese Schmelze dann schlagartig abgekühlt, so dass eine Weiterreaktion der Alkohole und Isocyanate bei Raumtemperatur nur sehr langsam von statten geht.

Wegen der unvollständigen Reaktion hat das erhaltene thermoplastische Polyurethan nur ein geringes Molekulargewicht und die Granulate neigen dazu, Agglomerate zu bilden und generell zu verkleben. Das führt zu Problemen bei der Förderung und Lagerung des Granulates.

Weiterhin hat die unvollständige Reaktion zur Folge, dass das erhaltene Granulat gelagert werden muss. Aufgrund der Materialeigenschaften führt eine Lagerung bei erhöhten Temperaturen zu einem Verkleben, so dass das erhaltene thermoplastische Polyurethan für eine lange Zeit bei niedrigen Temperaturen gelagert werden muss, bis ein zur Weiterverarbeitung ausreichendes Molekulargewicht erreicht wird.

Für die einstufigen Herstellverfahren werden üblicherweise Katalysatoren verwendet, um die Reaktionszeiten der Reaktanden zu verkürzen. Weit verbreitet sind dabei zinnorganische Verbindungen wie beispielsweise Dibutylzinndilaureat. Die zinnorganischen Verbindungen sind jedoch toxisch und können für viele Anwendungsbereiche nicht verwendet werden.

Eine Alternative zu den zinnorganischen Katalysatoren stellen Zinnsalze dar, wie beispielsweise Zinndioctoat. Diese Katalysatoren sind sehr effizient, verlieren aber ihre Reaktivität im Kontakt mit Wasser. Bei der Unterwassergranulierung einer TPU Schmelze (wie im kontinuierlichen Verfahren angestrebt) fällt ein großer Teil des Zinnsalzes als unreaktiver Zinnstein aus, so dass eine katalysierte Weiterreaktion nach dem Granulieren nicht erfolgen kann.

Anwendung finden auch Katalysatoren basiert auf Eisen (z.B. Fe acetylacetonate) oder Titan (z.B. Titanorthotitanat), welche jedoch häufig zu hohen Anfangsgelbgraden des erhaltenen thermoplastischen Polyurethans führen. Katalysatoren basiert auf Kalium, Zirkonium, Zink oder Aluminium oder auch Aminkatalysatoren sind ebenfalls bekannt.

EP 1 422 259 A1 offenbart die kontinuierliche Herstellung von thermoplastischen Polyurethanen basierend auf Polytetrahydrofurandiol, 1,4-Butandiol als Kettenverlängerer, H12MDI als Isocyanat und Dibutylzinndilaurat als Katalysator in einem Extruder und anschließendem Granulieren mittels Stranggranulierung oder Unterwassergranulierung.

DE 695 16 978 T2 offenbart thermoplastische Polyurethan-Elastomere hergestellt aus einem Polyol, 1,4-Butandiol als KettenverlängererH12MDI Isocyanat und Bismutneodecanoat als Katalysator.

WO 2009/023131 A2 offenbart ein TPU hergestellt aus H12MDI als Isocyanat-Komponente und einer Polyol-Komponente, bestehend aus Polyetherpolyol, Butandiol als Kettenverlängerer, Bismutneodecanoat als Katalysator sowie weiteren Additiven.

In der Veröffentlichung "Alternatives to DBTL catalysts in polyurethanes - a comparative study" von Dieter Guhl werden Alternativen zu DBTL Katalysatoren in Polyurethanen wie auch Bismutneodecanoat beschrieben.

WO 03/099875 A2 offenbart thermoplastische Polyurethane, die in einem Extruder aus einem Isocyanat, einem Polyol, einem Kettenverlängerer und Bismuth-neodecanoat als Katalysator hergestellt werden und mittels Unterwassergranulierung zu einem Pellet verarbeitet werden.

WO 20 15/063062A1 offenbart ein Verfahren zu Herstellung von transparentem, thermoplastischem Polyurethan aus einem Kettenverlängerer, einem Polyol, einem Isocyanat und einem Katalysator, beispielsweise Bismuth-neodecanoat.

EP 1 801 141 A1 offenbart ein thermoplastisches Polyurethan hergestellt aus ein Zusammensetzung enthaltend monomeres 4,4'-Diisocyanatodicyclohexylmethan, sowie Butandiol ein Polyesterdiol und Bismut(III)-octoat.

Somit lag eine der vorliegenden Erfindung zugrunde liegende Aufgabe darin, ein Verfahren zur Herstellung eines thermoplastischen Polyurethans basierend auf H12MDI bereitzustellen, mit dem das thermoplastische Polyurethan kontinuierlich in einfacher Weise hergestellt werden kann. Weiter sollte das Verfahren unter Verwendung von reaktiven nicht toxischen Katalysatoren durchgeführt werden. Eine weitere Aufgabe lag darin, thermoplastische Polyurethane basierend auf H12MDI bereitzustellen, die eine verringerter Klebeneigung und vorzugsweise einen geringen Gelbgrad aufweisen.

Erfindungsgemäß wird diese Aufgabe gelöst durch ein Verfahren zur Herstellung eines thermoplastischen Polyurethans umfassend die folgenden Schritte
(i) Umsetzung einer Isocyanatzusammensetzung mindestens enthaltend 4,4'-Diisocyanatodicyclohexylmethan (H12MDI), wobei neben H12MDI kein weiteres Isocyanat eingesetzt wird, mit einer Polyolzusammensetzung (PZ), wobei die Polyolzusammensetzung (PZ) mindestens ein Polyol ausgewählt aus der Gruppe bestehend aus Polycarbonatdiolen, Polyethern und Polyestern enthält, und wobei das Äquivalenzverhältnis von NCO-Gruppen der Isocyanate zur Summe der Hydroxylgruppen der eingesetzten Polyole 0,9 bis 1,1 : 1 beträgt, in Gegenwart einer Katalysatorzusammensetzung mindestens enthaltend eine bismuthaltige Verbindung ausgewählt aus Bismut(tricarboxylat)katalysatoren, wobei die Carboxylreste unabhängig voneinander 6 bis 12 C-Atome aufweisen, unter Erhalt einer Schmelze;
(ii) Herstellung eines Granulats aus der gemäß Schritt (i) erhaltenen Schmelze.
(iii) Lagerung des gemäß Schritt (ii) erhaltenen Granulats,

wobei die Katalysatorzusammensetzung in einer Menge von 50 bis 600 ppm eingesetzt wird, bezogen auf die Gesamtmenge der eingesetzten Komponenten,
wobei während der Lagerung gemäß Schritt (iii) eine katalytisch beschleunigte Weiterreaktion erfolgt, und nach der Lagerung ein Granulat mit höherem Molekulargewicht erhalten wird,
wobei die Herstellung gemäß Schritt (ii) mittels Unterwassergranulieren oder mittels Stranggranulieren erfolgt.

Es wurde überraschend gefunden, dass mit dem erfindungsgemäßen Verfahren thermoplastische Polyurethane basierend auf H12MDI einfach hergestellt werden können und die erhaltenen Produkte geringe Gelbgrade aufweisen. Durch den Einsatz von Bismut(tricarboxylat)-Katalysatoren, wobei die Carboxylreste unabhängig voneinander 6 bis 12 C-Atome aufweisen, konnten überraschender Weise thermoplastische Polyurethane mit hohen Molekulargewichten und geringen Gelbgraden erhalten werden. Es wurde überraschend gefunden, dass die eingesetzten Bismut-Katalysatoren auch nach der Herstellung des Granulats aus der Schmelze stabil bleiben und eine Weiterreaktion im Granulat möglich ist.

Das erfindungsgemäße Verfahren umfasst die Schritte (i) und (ii) und (iii). Dabei wird gemäß Schritt (i) eine Isocyanatzusammensetzung mindestens enthaltend 4,4'-Diisocyanatodicyclohexylmethan (H12MDI) mit einer Polyolzusammensetzung (PZ) in Gegenwart einer Katalysatorzusammensetzung mindestens enthaltend eine bismuthaltige Verbindung ausgewählt aus Bismut(tricarboxylat)katalysatoren, wobei die Carboxylreste unabhängig voneinander 6 bis 12 C-Atome aufweisen, unter Erhalt einer Schmelze umgesetzt. Gemäß Schritt (ii) wird aus der gemäß Schritt (i) erhaltenen Schmelze ein Granulat hergestellt. Das erfindungsgemäße Verfahren kann dabei weitere Schritte, beispielsweise Lagerung oder Temperaturanpassungen umfassen.

Insbesondere kann das erfindungsgemäße Verfahren Lagerungs- und/oder Temperungsschritte umfassen. Beispielsweise kann die Temperung bei Temperaturen im Bereich von 30 bis 40°C erfolgen.

Nach der Lagerung des gemäß Schritt (ii) erhaltenen Granulats wird erfindungsgemäß ein Granulat mit höherem Molekulargewicht erhalten, d.h. während der Lagerung gemäß Schritt (iii) erfolgt eine Weiterreaktion.

Erfindungsgemäß kann die Lagerung beispielsweise bei einer Temperatur im Bereich von 20 bis 40°C erfolgen. Dabei kann die Lagerung für eine Zeit im Bereich von 1 bis 100 Tagen erfolgen, beispielsweise für eine Zeit im Bereich von 60 bis 90 Tagen.

Ebenso ist es im Rahmen der vorliegenden Erfindung möglich, dass die Lagerung gemäß Schritt (iii) bei einer erhöhten Temperatur, beispielsweise bei einer Temperatur im Bereich von 50 bis 90°C erfolgt. Im Rahmen dieser Ausführungsform erfolgt die Lagerung beispielsweise für eine Zeit im Bereich von 5 bis 48 Stunden.

Die erfindungsgemäß eingesetzte Isocyanatzusammensetzung enthält mindestens 4,4'-Diisocyanatodicyclohexylmethan (H12MDI), wobei neben H12MDI kein weiteres Isocyanat eingesetzt wird.

So wird im Rahmen der vorliegenden Erfindung neben H12MDI kein weiteres Isocyanat eingesetzt.

Gemäß Schritt (i) wird die Isocyanatzusammensetzung mit einer Polyolzusammensetzung (PZ) umgesetzt, wobei die Polyolzusammensetzung (PZ) mindestens ein Polyol ausgewählt aus der Gruppe bestehend aus Polycarbonatdiolen, Polyethern und Polyestern enthält, und wobei das Äquivalenzverhältnis von NCO-Gruppen der Isocyanate zur Summe der Hydroxylgruppen der eingesetzten Polyole 0,9 bis 1,1 : 1 beträgt. Die Polyolzusammensetzung enthält dabei im Rahmen der vorliegenden Erfindung ein oder mehrere Polyole. Übliche Polyole sind dem Fachmann bekannt. Im Rahmen der vorliegenden Erfindung können als Polyole insbesondere allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole.

Geeignete Polyether und Polyester sind dem Fachmann grundsätzlich bekannt.

Bevorzugt werden als Polyesterdiole Verbindungen eingesetzt, die erhältlich sind durch Umsetzung von Butandiol und Hexandiol als Diol mit Adipinsäure als Dicarbonsäure. Geeignete Polyesterdiole weisen beispielsweise ein Molekulargewicht im Bereich von 600 bis 4000 g/mol, bevorzugt 800 bis 2500 g/mol, besonders bevorzugt 1800 bis 2200 g/mol, auf.

Gemäß einer Ausführungsform der vorliegenden Erfindung wird ein Polycarbonatdiol oder ein Polytetrahydrofuranpolyol eingesetzt. Geeignete Polytetrahydrofuranpolyole weisen beispielsweise ein Molekulargewicht im Bereich von 500 bis 5000 g/mol, bevorzugt 500 bis 2000 g/mol, besonders bevorzugt 800 bis 1200 g/mol, auf.

Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf 1,4-Butandiol, 1,5-Pentandiol oder 1,6-Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf 1,4-Butandiol und 1,6-Hexandiol, Polycarbonatdiole basierend auf 1,5-Pentandiol und 1,6-Hexandiol, Polycarbonatdiole basierend auf 1,6-Hexandiol, und Mischungen aus zwei oder mehr dieser Polycarbonatdiole eingesetzt.

Vorzugsweise weisen die eingesetzten Polycarbonatdiole ein zahlenmittleres Molekulargewicht Mn im Bereich von 500 bis 4000 g/mol, bestimmt über GPC, bevorzugt im Bereich von 650 bis 3500 g/mol, bestimmt über GPC, besonders bevorzugt im Bereich von 800 bis 3000 g/mol, bestimmt über GPC, auf.

Die Polyolzusammensetzung (PZ) kann im Rahmen der vorliegenden Erfindung weitere Polyole enthalten, beispielsweise auch Kettenverlängerer.

Als Kettenverlängerer können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglykol, 1,3-Propandiol, 1,4-Butandiol, 1,6-Hexandiol, bevorzugt entsprechende Oligound/oder Polypropylenglykole, wobei auch Mischungen der Kettenverlängerer eingesetzt werden können. Bevorzugt weisen die eingesetzten Kettenverlängerer nur primäre Hydroxylgruppen auf, ganz besonders bevorzugt ist 1,4-Butandiol.

Gemäß einer weiteren Ausführungsform betrifft die vorliegenden Erfindung daher ein Verfahren zur Herstellung eines thermoplastischen Polyurethans wie zuvor beschrieben, wobei die Polyolzusammensetzung (PZ) mindestens einen Kettenverlängerer ausgewählt aus der Gruppe bestehend aus Diolen mit 2 bis 6 C-Atomen enthält. Insbesondere betrifft die vorliegende Erfindung ein Verfahren zur Herstellung eines thermoplastischen Polyurethans wie zuvor beschrieben, wobei die Polyolzusammensetzung (PZ) 1,4-Butandiol als Kettenverlängerer enthält.

Zur Einstellung der Härte der thermoplastischen Polyurethane können die eingesetzten Mengen der Aufbaukomponenten in relativ breiten molaren Verhältnissen variiert werden, wobei die Härte üblicherweise mit zunehmendem Gehalt an Kettenverlängerer ansteigt. Vorzugsweise wird das Mischungsverhältnis der eingesetzten Komponenten derart eingestellt, dass ein thermoplastisches Polyurethan mit einer Shore Härte im Bereich von 60A bis 60D, bestimmt gemäß DIN 53505, beispielsweise im Bereich von 70A bis 100A, bestimmt gemäß DIN 53505, erhalten wird, bevorzugt mit einer Shore Härte im Bereich von 70A bis 98A, bestimmt gemäß DIN 53505, weiter bevorzugt mit einer Shore Härte im Bereich von 70A bis 90A, bestimmt gemäß DIN 53505.

Gemäß einer weiteren Ausführungsform betrifft die vorliegende Erfindung daher eine Zusammensetzung wie zuvor beschrieben, wobei das thermoplastische Polyurethan eine Shore Härte im Bereich von 60A bis 100A, bestimmt gemäß DIN 53505, aufweist.

Zur Herstellung der erfindungsgemäßen thermoplastischen Polyurethane werden die die Isocyanatzusammensetzung und die Polyolzusammensetzung (PZ) in Gegenwart von Katalysatoren und gegebenenfalls Hilfsmitteln und/oder Zusatzstoffen in solchen Mengen zur Reaktion gebracht, dass das Äquivalenzverhältnis von NCO-Gruppen der Isocyanate zur Summe der Hydroxylgruppen der eingesetzten Polyole 0,9 bis 1,1 : 1, vorzugsweise 0,98 bis 1,02 : 1 und insbesondere ungefähr 0,99 bis 1,01 : 1 beträgt.

Gemäß Schritt (i) wird eine Katalysatorzusammensetzung mindestens enthaltend eine bismuthaltige Verbindung ausgewählt aus Bismut(tricarboxylat)katalysatoren, wobei die Carboxylreste unabhängig voneinander 6 bis 12 C-Atome aufweisen, eingesetzt. Die Katalysatorzusammenseztung kann dabei im Rahmen der vorliegenden Erfindung auch zwei oder mehr Bismut-Verbindungen ausgewählt aus Bismut(tricarboxylat)katalysatoren enthalten, wobei die Carboxylreste unabhängig voneinander 6 bis 12 C-Atome aufweisen.

Erfindungsgemäß kann die eingesetzte Menge an Katalysator in breiten Bereichen variieren. Erfindungsgemäß geeignete Mengen liegen im Bereich von 50 bis 600 ppm, bevorzugt im Bereich von 100 bis 500 ppm, weiter bevorzugt im Bereich von 200 bis 400 ppm, jeweils bezogen auf die Gesamtmenge der eingesetzten Komponenten.

Geeignete Bismut-Verbindungen sind insbesondere Bismuttri(2-ethyl-hexanoat), Bismutoktoat und/oder Bismutneodekanoat. Bevorzugt sind erfindungsgemäß Bismuttri(2-ethyl-hexanoat), und/oder Bismutneodekanoat, besonders bevorzugt Bismutneodekanoat.

Gemäß einer weiteren Ausführungsform betrifft die vorliegende Erfindung daher ein Verfahren zur Herstellung eines thermoplastischen Polyurethans wie zuvor beschrieben, wobei die Katalysatorzusammensetzung Bismut-neodecanoat enthält.

Neben Katalysatoren können bei der Umsetzung gemäß Schritt (i) auch übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Das erfindungsgemäße Verfahren umfasst Schritte (i) und (ii) und (iii). Gemäß Schritt (i) wird die Isocyanatzusammensetzung mit der Polyolzusammensetzung (PZ) in Gegenwart der Katalysatorzusammensetzung unter Erhalt einer Schmelze umgesetzt. Dabei sind im Rahmen der vorliegenden Erfindung alle geeigneten Verfahren einsetzbar, bei denen die Komponenten unter Erhalt einer Schmelze umgesetzt werden können. So kann die Umsetzung beispielsweise bei erhöhter Temperatur erfolgen, um eine Schmelze zu erhalten. Hierbei ist es vorteilhaft, wenn eine gute Verteilung der Komponenten erfolgt. Eine homogene Verteilung kann beispielsweise in einem Extruder erfolgen, bevorzugt in einem Zweiwellenextruder.

Geeignet sind somit insbesondere Verfahren, die im Extruder durchgeführt werden. Geeignete Extruder sind dem Fachmann grundsätzlich bekannt.

So werden beispielsweise bei sogenannten Reaktionsextruderverfahren die Aufbaukomponenten und die Katalysatorzusammensetzung einzeln oder als Gemisch in den Extruder eingeführt und beispielsweise bei Temperaturen von 100°C bis 250°C, vorzugsweise 140°C bis 220°C zur Reaktion gebracht. Das erhaltene thermoplastische Polyurethan wird extrudiert.

Gemäß einer weiteren Ausführungsform betrifft die vorliegende Erfindung somit ein Verfahren zur Herstellung eines thermoplastischen Polyurethans wie zuvor beschrieben, wobei die Umsetzung gemäß Schritt (i) in einem Extruder erfolgt.

Geeignete Bedingungen für die Umsetzung im Extruder sind dem Fachmann an sich bekannt.

Gemäß einer weiteren Ausführungsform betrifft die vorliegende Erfindung daher ein Verfahren zur Herstellung eines thermoplastischen Polyurethans wie zuvor beschrieben, wobei die Verweilzeit im Extruder so gewählt wird, dass ein Umsatz von mindestens 98% erreicht wird.

Typischerweise beträgt die Verweilzeit im Extruder mindestens 40 Sekunden, bevorzugt mindestens 60 Sekunden. Üblicherweise beträgt die Verweilzeit im Extruder höchstens 300 Sekunden.

Die Bedingungen im Extruder werden typischerweise so gewählt, dass das thermoplastische Polyurethan eine Viskosität aufweist, die eine Unterwassergranulierung ermöglicht. Geeignete Viskositäten liegen beispielsweise im Bereich von 50 Pas bis 150 Pas, bevorzugt im Bereich von 60 Pas bis 120 Pas, weiter bevorzugt im Bereich von 70 Pas bis 110 Pas.

Das erfindungsgemäße Verfahren umfasst weiterhin Schritt (ii). Gemäß Schritt (ii) wird ein Granulat aus der gemäß Schritt (i) erhaltenen Schmelze hergestellt. Im Rahmen der vorliegenden Erfindung können dabei aller geeigneten Verfahren eingesetzt werden, um aus der Schmelze ein Granulat herzustellen. Geeignete Verfahren sind dem Fachmann an sich bekannt. Als vorteilhaft hat sich im Rahmen der vorliegenden Erfindung Unterwassergranulieren oder Stranggranulieren erwiesen. Dabei ist es vorteilhaft, dass die eingesetzten Katalysatoren bei Kontakt mit Wasser weiter aktiv bleiben, so dass auch im erhaltenen Granulat eine katalytisch beschleunigte Weiterreaktion erfolgen kann.

Erfindungsgemäß erfolgt die Herstellung gemäß Schritt (ii) mittels Unterwassergranulieren oder Stranggranulieren.

Erfindungsgemäß wird das thermoplastische Polyurethan in Form eines Granulats erhalten. Das thermoplastische Polyurethan weist dabei geringe Gelbgrade auf, beispielsweise Gelbgrade von kleiner 20 YI, bevorzugt von kleiner 18 YI, weiter bevorzugt von kleiner 15 YI. Der Gelbgrad wird dabei bestimmt gemäß ASTM E 313.

Erfindungsgemäß wird insbesondere ein thermoplastisches Polyurethan erhalten, das ein Molekulargewicht im Bereich von 70000 bis 100000 aufweist, bevorzugt im Bereich von 80000 bis 100000, weiter bevorzugt im Bereich von 85000 bis 100000. Soweit nicht anders angegeben erfolgt im Rahmen der vorliegenden Erfindung die Molekulargewichtsbestimmung gemäß der im Beispielteil angegebenen Beschreibung.

Das erfindungsgemäß erhaltene thermoplastische Polyurethan enthält üblicherweise Reste des im Verfahren eingesetzten Bismutkatalysators.

Die vorliegende Erfindung beschreibt somit auch ein thermoplastisches Polyurethan basierend auf einer Isocyanatzusammensetzung mindestens enthaltend 4,4'-Diisocyanatodicyclohexylmethan (H12MDI) und einer Polyolzusammensetzung (PZ), mindestens enthaltend ein Polyol und einen Kettenverlängerer ausgewählt aus der Gruppe bestehend aus Diolen mit 2 bis 6 C-Atomen, wobei das thermoplastische Polyurethan einen Bismutgehalt im Bereich von 1 bis 200 ppm aufweist.

Beispielsweise weist das gemäß dem erfindungsgemäßen Verfahren erhaltene thermoplastische Polyurethan einen Bismutgehalt im Bereich von 1 bis 200 ppm auf, weiter bevorzugt im Bereich von 10 bis 170 ppm, besonders bevorzugt im Bereich von 50 bis 110 ppm, jeweils bezogen auf das thermoplastische Polyurethan.

Die gemäß dem erfindungsgemäßen Verfahren erhaltenen thermoplastischen Polyurethane weisen vorzugsweise eine Shore Härte im Bereich von 60A bis 60D, bestimmt gemäß DIN 53505, auf, beispielsweise im Bereich von 70A bis 100A, bestimmt gemäß DIN 53505, erhalten wird, bevorzugt eine Shore Härte im Bereich von 70A bis 98A, bestimmt gemäß DIN 53505, weiter bevorzugt eine Shore Härte im Bereich von 70A bis 90A, bestimmt gemäß DIN 53505.

Die gemäß dem erfindungsgemäßen Verfahren erhaltenen thermoplastischen Polyurethane eigenen sich für eine Vielzahl von Anwendungen. Die Verarbeitung der erfindungsgemäß hergestellten thermoplastischen Polyurethane zu den gewünschten Kunststoffteilen oder Folien kann beispielsweisedurch allgemein bekannte Extrusion, durch üblichen Spritzguss oder auch andere an sich bekannte Verfahren erfolgen.

Die erhaltenen thermoplastischen Polyurethane weisen eine hohe Lichtechtheit und geringe Gelbgrade auf. Somit eigenen sie sich insbesondere zur Herstellung von Extrusionsprodukten, beispielsweise zur Herstellung von lichtleitenden Folien, Profilen, Kabeln, sowie Ummantelungen von LED Bändern, Steinschlagschutzfolien oder auch Laminatbeschichtungen.

Die vorliegende Erfindung beschreibt somit auch die Verwendung eines thermoplastischen Polyurethans erhalten oder erhältlich gemäß einem Verfahren wie zuvor beschrieben zur Herstellung von Folien, Profilen, Kabelummantelungen und Ummantelungen von LED Bändern.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe

- SDO:: Katalysator-Metall 93690, Zinnbis(2-ethylhexanoat), CAS-Nummer: 301-10-0, BASF Polyurethanes GmbH, 49440 Lemfoerde, GERMANY.
- DBTL:: Dibutylzinndilaureat, CAS 77-58-7, Sigma-Aldrich Chemie GmbH, Riedstrasse 2, D-89555 Steinheim.
- DBTA:: Dibutylzinnacetat zur Synthese, CAS 1067-33-0, Sigma-Aldrich Chemie GmbH, Riedstrasse 2, D-89555 Steinheim.
- Bicat 4130M:: Zirkoniumneodecanoat, CAS 51601-43-5, Shepherd Mirecourt S.A.R.L., Rue de Lorraine, BP 47 - Juvaincourt, FR-88502 Mirecourt Cedex, France.
- Bicat ZM:: Zinkneodecanoat, CAS 27253-28-8, Shepherd Mirecourt S.A.R.L., Rue de Lorraine, BP 47 - Juvaincourt, FR-88502 Mirecourt Cedex, France.
- Bicat 8124:: Bismutneodecanoat, CAS 34364-26-6, Shepherd Mirecourt S.A.R.L., Rue de Lorraine, BP 47 - Juvaincourt, FR-88502 Mirecourt Cedex, France.
- Poly PTHF^{®} 1000:: Polytetrahydrofuran 1000, CAS-Nummer: 25190-06-1, BASF SE, 67056 Ludwigshafen, GERMANY, Unternehmensbereich Zwischenprodukte.
- 1,4-Butandiol:: Butan-1,4-diol, CAS-Nummer: 110-63-4, BASF SE, 67056 Ludwigshafen, GERMANY, Unternehmensbereich Zwischenprodukte.
- 1,3-Propandiol:: SUSTERRA^{®} PROPANEDIOL, Propan-1,3-diol, CAS-Nummer: 504-63-2, DuPont Tate & Lyle Bio Products Company, 198 Blair Bend Drive, Loudon TN 37774, USA.
- Vestanat^{®} H₁₂MDI:: 4,4'-Diisocyanatodicyclohexylmethan, CAS 5124-30-1, Evonik Degussa GmbH, Coatings & Adhesives, D-45765 Marl.
- Irganox^{®} 245 FF:: Ethylenbis(oxyethylen)bis[3-(5-tert-butyl-4-hydroxy-mtolyl)propionat], CAS-Nummer: 36443-68-2, BASF SE, 67056 Ludwigshafen, GERMANY, Antioxidantien/Prozess-Stabilisatoren.

### 2. Rezepturen

**Tabelle 1: Rezepturen**

| | TPU A | TPU B | TPU C |
|---|---|---|---|
| PolyTHF^{®} 1000 [g] | 1365,6 | 1264,1 | 1365,6 |
| Vestanat^{®} H₁₂MDI [g] | 931,7 | 1001,4 | 940,9 |
| 1,4-Butandiol [g] | 191,2 | 134,0 | 191,2 |
| 1,3-Propandiol [g] | | 75,5 | |
| Irganox^{®} 245 FF [g] | 10 | 5,0 | 10 |

### 3. Verfahrensbeschreibung Reaktionsextruder

Das Mischen der o.a. Ausgangskomponenten sowie die Reaktion der reaktiven Spezies erfolgte bei der Reaktivextrusion in selbstreinigenden Zweiwellenextrudern gemäß dem in EP1846465B1 oder EP1213307B1 beschriebenen Verfahren. Als Apparat, der das Reaktionsgemisch zur Ausreaktion bringt, wurde hier ein Zweiwellenextruder mit einem Verhältnis von Schneckenlänge zu Schneckendurchmesser von 56 gewählt. Nach einer Verweilzeit im Reaktionsextruder von mindestens 40 s bevorzugt größer als 60 s wird durch die Polyaddition der Isocyanat haltigen Verbindungen mit den gegenüber Isocyanat haltigen Verbindungen eine Polymerschmelze mit einer so hohen Viskosität erzeugt, dass diese mittels Unterwasser- oder Strangranulierung zu Granulaten verarbeitet werden kann.

### 4. Bestimmung der gewichtsmittleren Molekulargewichte

Die Bestimmung der gewichtsmittleren Molekulargewichte Mw der thermoplastischen Polyurethane erfolgt dabei im Rahmen der vorliegenden Erfindung mittels GPC. Die Bestimmung des Molekulargewichts erfolgt gemäß Beispiel 1 (Zwei hintereinandergeschaltete GPC-Säulen: PSS-Gel; 100A; 5µ; 300*8mm, Jordi- Gel DVB; MixedBed; 5µ;
250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird Dimethylformamid verwendet.

### 5. Beispiele

5.1 Mischung TPU A wurde im Reaktionsextruderverfahren unter Verwendung der Katalysatoren DBTL, DBTA und SDO hergestellt. Alle drei Versuche wurden am gleichen Reaktionsextruder bei gleichen Temperaturen, Schneckendrehzahlen sowie Durchsätzen hergestellt. Die Ergebnisse sind in Tabelle 2 zusammengestellt.

Mit den zinnorganischen Katalysatoren DBTL, DBTA und SDO kann ein guter Molekulargewichtsaufbau während der kurzen Verweilzeit im Reaktionsextruder erreicht werden.

Nach der Unterwassergranulierung erfolgt der Aufbau von Molekulargewicht schneller mit den zinnorganischen Verbindungen DBTL und DBTA.

Diese hocheffizienten zinnorganischen Katalysatoren DBTL und DBTA sind jedoch wegen ihrer Giftigkeit in den TPU unerwünscht.

**Tabelle 2**

| | Katalyse ppm | Mw Frisch | Mw 2 Wochen/45°C |
|---|---|---|---|
| DBTL Dibutylzinndilaurat | 100 ppm | 46000 | 102000 |
| DBTA Dibutyltin diacetate | 100 ppm | 47000 | 77000 |
| SDO Sn-dioctoate | 300 ppm | 40000 | 48000 |

5.2 Mischung TPU B wurde im Reaktionsextruderverfahren unter Verwendung der Katalysatoren SDO, Bicat 4130M, Bicat ZM und Bicat 8124 hergestellt. Alle vier Versuche wurden am gleichen Reaktionsextruder bei gleichen Temperaturen, Schneckendrehzahlen sowie Durchsätzen hergestellt.

Mit den Katalysatoren Bicat ZM, Bicat 8124 und SDO kann ein guter Molekulargewichtsaufbau während der kurzen Verweilzeit im Reaktionsextruder erreicht werden. Das gelingt nicht bei Verwendung von Bicat 4130M.

Es zeigte sich, dass die erhaltenen Granulate bei Verwendung des Katalysators Bicat ZM sehr hohe Gelbgrade aufweisen. Die bei Verwendung von SDO und Bicat 8124 führt zu Granulaten mit akzeptablen Gelbgraden von < 5. Der Gelbgrad wird bestimmt gemäß ASTM E 313.

Nach der Unterwassergranulierung erfolgt der Aufbau von Molekulargewicht schneller bei Verwendung von Bicat 8124. Die Ergebnisse sind in Tabelle 3 zusammengestellt.

**Tabelle 3**

| | Katalyse [ppm] | Mw Frisch | Gelbgrad [Yl] | Mw 4 Wochen/23°C |
|---|---|---|---|---|
| SDO Sn-dioctoate | 250 | 43000 | < 5 | 58000 |
| Bicat 4130M Zr-neodecanoat | 500 | < 10000 | n.b. | n.b. |
| Bicat ZM Zn-neodecanoat | 100 | 48000 | 110 | n.b. |
| Bicat 8124 Bi-(III)-neodecanoat | 100 | 51000 | < 5 | 89000 |

5.3 Mischung TPU B wurde im Reaktionsextruderverfahren unter Verwendung der Katalysatoren SDO, TBOT und Bicat 8124 hergestellt. Alle drei Versuche wurden am gleichen Reaktionsextruder bei gleichen Temperaturen, Schneckendrehzahlen sowie Durchsätzen hergestellt.

Mit den Katalysatoren SDO, TBOT und Bicat 8124 kann ein guter Molekulargewichtsaufbau während der kurzen Verweilzeit im Reaktionsextruder erreicht werden.

Nach der Unterwassergranulierung erfolgt der Aufbau von Molekulargewicht schneller bei Verwendung von Bicat 8124. Die Ergebnisse sind in Tabelle 4 zusammengestellt.

**Tabelle 4**

| | Katalyse [ppm] | Mw Frisch | Gelbgrad [Yl] | Mw 20h/80°C |
|---|---|---|---|---|
| SDO Sn-dioctoate | 300 | 42000 | < 5 | 53000 |
| TBOT Tetrabutylorthotitanat | 200 | 40000 | 10 | 50000 |
| Bicat 8124 Bi-(III)-neodecanoat | 400 | 49000 | < 5 | 88000 |

## Patentansprüche

1. Verfahren zur Herstellung eines thermoplastischen Polyurethans umfassend die folgenden Schritte
(i) Umsetzung einer Isocyanatzusammensetzung mindestens enthaltend 4,4'-Diisocyanatodicyclohexylmethan (H12MDI), wobei neben H12MDI kein weiteres Isocyanat eingesetzt wird, mit einer Polyolzusammensetzung (PZ), wobei die Polyolzusammensetzung (PZ) mindestens ein Polyol ausgewählt aus der Gruppe bestehend aus Polycarbonatdiolen, Polyethern und Polyestern enthält, und wobei das Äquivalenzverhältnis von NCO-Gruppen der Isocyanate zur Summe der Hydroxylgruppen der eingesetzten Polyole 0,9 bis 1,1 : 1 beträgt, in Gegenwart einer Katalysatorzusammensetzung mindestens enthaltend eine bismuthaltige Verbindung ausgewählt aus Bismut(tricarboxylat)katalysatoren, wobei die Carboxylreste unabhängig voneinander 6 bis 12 C-Atome aufweisen, unter Erhalt einer Schmelze;
(ii) Herstellung eines Granulats aus der gemäß Schritt (i) erhaltenen Schmelze,
(iii) Lagerung des gemäß Schritt (ii) erhaltenen Granulats,
wobei die Katalysatorzusammensetzung in einer Menge von 50 bis 600 ppm eingesetzt wird, bezogen auf die Gesamtmenge der eingesetzten Komponenten,
wobei während der Lagerung gemäß Schritt (iii) eine katalytisch beschleunigte Weiterreaktion erfolgt, und nach der Lagerung ein Granulat mit höherem Molekulargewicht erhalten wird,
wobei die Herstellung gemäß Schritt (ii) mittels Unterwassergranulieren oder mittels Stranggranulieren erfolgt.

2. Verfahren gemäß Anspruch 1, wobei die Polyolzusammensetzung (PZ) mindestens einen Kettenverlängerer ausgewählt aus der Gruppe bestehend aus Diolen mit 2 bis 6 C-Atomen enthält.

3. Verfahren gemäß einem der Ansprüche 1 oder 2, wobei die Katalysatorzusammensetzung Bismut-neodecanoat enthält.

4. Verfahren gemäß einem der Ansprüche 1 bis 3, wobei die Umsetzung gemäß Schritt (i) in einem Extruder erfolgt.

5. Verfahren gemäß einem der Ansprüche 1 bis 4, wobei die Verweilzeit im Extruder so gewählt wird, dass ein Umsatz von mindestens 98% erreicht wird.

## Claims

1. A method for producing a thermoplastic polyurethane, comprising the following steps:
(i) reacting an isocyanate composition at least comprising 4,4'-diisocyanatodicyclohexyl-methane (H12MDI), where no isocyanate other than H12MDI is used, with a polyol composition (PZ), where the polyol composition (PZ) comprises at least one polyol selected from the group consisting of polycarbonate diols, polyethers, and polyesters, and where the equivalence ratio of NCO groups in the isocyanates to the sum total of the hydroxyl groups in the polyols used is 0.9 to 1.1:1, in the presence of a catalyst composition at least comprising a bismuth-containing compound selected from bismuth (tricarboxylate) catalysts, where the carboxyl radicals independently of one another have 6 to 12 carbon atoms, to give a melt;
(ii) producing pellets from the melt obtained as per step (i);
(iii)storing the pellets obtained as per step (ii);
where the catalyst composition is used in an amount of 50 to 600 ppm, based on the total amount of the components used,
where a catalytically accelerated continued reaction takes place during the storage as per step (iii), and after the storage pellets of higher molecular weight are obtained,
where the production as per step (ii) takes place by means of underwater pelletizing or by means of strand pelletizing.

2. The method according to claim 1, wherein the polyol composition (PZ) comprises at least one chain extender selected from the group consisting of diols having 2 to 6 carbon atoms.

3. The method according to either of claims 1 and 2, wherein the catalyst composition comprises bismuth neodecanoate.

4. The method according to any of claims 1 to 3, wherein the reaction as per step (i) takes place in an extruder.

5. The method according to any of claims 1 to 4, wherein the residence time in the extruder is selected such that a conversion of at least 98% is achieved.

## Revendications

1. Procédé de préparation d'un polyuréthane thermoplastique comprenant les étapes suivantes :
(i) transformation d'une composition d'isocyanate contenant au moins du 4,4'-diisocyanatodicyclohexylméthane (H12MDI), outre le H12MDI aucun autre isocyanate n'étant utilisé, avec une composition de polyol (PZ), la composition de polyol (PZ) contenant au moins un polyol choisi dans le groupe constitué par des polycarbonatediols, des polyéthers et des polyesters, et le rapport d'équivalence de groupes NCO des isocyanates sur la somme des groupes hydroxyle des polyols utilisés étant de 0,9 à 1,1 : 1, en présence d'une composition de catalyseur contenant au moins un composé contenant du bismuth choisi parmi des catalyseurs de type tricarboxylate de bismuth, les radicaux carboxyle présentant indépendamment les uns des autres 6 à 12 atomes de C, avec obtention d'une masse fondue ;
(ii) préparation d'un granulat à partir de la masse fondue obtenue selon l'étape (i),
(iii) stockage du granulat obtenu selon l'étape (ii),
la composition de catalyseur étant utilisée en une quantité de 50 à 600 ppm, par rapport à la quantité totale des composants utilisés,
pendant le stockage selon l'étape (iii) une réaction supplémentaire accélérée de manière catalytique a lieu, et après le stockage un granulat doté d'un poids moléculaire plus élevé est obtenu,
la préparation selon l'étape (ii) étant réalisée au moyen d'une granulation sous l'eau ou au moyen d'une granulation de rubans.

2. Procédé selon la revendication 1, la composition de polyol (PZ) contenant au moins un agent d'extension de chaînes choisi dans le groupe constitué par des diols comportant 2 à 6 atomes de C.

3. Procédé selon l'une quelconque des revendications 1 et 2, la composition de catalyseur contenant du néodécanoate de bismuth.

4. Procédé selon l'une quelconque des revendications 1 à 3, la transformation selon l'étape (i) étant réalisée dans une extrudeuse.

5. Procédé selon l'une quelconque des revendications 1 à 4, le temps de séjour dans l'extrudeuse étant choisi de telle manière qu'un rendement d'au moins 98 % soit atteint.
